# FASCICULE DE BREVET EUROPEEN

(11) **EP 3 702 583 B1**
(45) Date de publication et mention de la délivrance du brevet: **20.10.2021**
(21) Numéro de dépôt: 20157986.9
(22) Date de dépôt: 18.02.2020
(51) Int. Cl.: F01C 17/00, F04C 2/34, F04C 15/00, F16J 3/04

(54) **POMPE VOLUMÉTRIQUE À PISTON EXCENTRÉ**
VERDRÄNGERPUMPE MIT EXZENTRISCHEM KOLBEN
VOLUMETRIC PUMP WITH ECCENTRIC PISTON

(30) Priorité: 26.02.2019 FR 1901934
(43) Date de publication de la demande: 02.09.2020
(73) Titulaire: Mouvex, 89000 Auxerre (FR)
(72) Inventeur: BESNIER, Yann, 89240 LINDRY (FR); FONTAINE, Alexis, 89000 AUXERRE (FR)
(74) Mandataire: Novagraaf Technologies

(56) Documents cités:
- WO-A1-97/36107
- DE-A1-102018 212 819
- US-A- 762 539

## Description

L'invention se rapporte au domaine des pompes, en particulier aux pompes volumétrique à piston excentré.

Une pompe volumétrique à piston excentré comprend généralement un cylindre comprenant une ouverture d'aspiration et partageant une extrémité avec une zone de refoulement. Au niveau de cette extrémité un piston est monté coulissant sur le bout d'un arbre d'entrainement et est plaqué par des moyens de plaquage, tels que des ressorts, contre le cylindre bloquant ainsi le passage de fluide. Lors de fonctionnement de la pompe en charge, la pression exercée sur le piston peut faire fléchir l'arbre d'entrainement. L'effort de pression correspondant peut alors entraîner un décollement du piston du cylindre provoquant alors des fuites qui dégradent le rendement de la pompe.

Un exemple de pompe volumétrique à piston excentré est décrit et représenté dans le document WO97/36107. Un piston circulaire effectue un mouvement orbital à l'intérieur d'un cylindre délimité par deux parois circulaires de diamètres différents. Le diamètre du piston est évidemment compris entre ces deux diamètres. Le cylindre est muni d'une paroi permettant d'isoler les chambres d'aspiration et de refoulement. La jupe du piston est interrompue au droit de cette paroi aussi appelée cloison. Le centre du piston est animé d'un mouvement circulaire tandis que le piston ne tourne pas sur lui-même, c'est-à-dire que les axes d'abscisse et d'ordonnée restent en permanence parallèles à leur orientation initiale.

Un but de la présente invention est de répondre aux inconvénients du document de l'art antérieur mentionné ci-dessus et en particulier de réduire voire supprimer les fuites entre le piston et le cylindre de la pompe lors du fonctionnement en charge.

Pour cela, un premier aspect de l'invention concerne une pompe volumétrique à piston excentré comprenant, une tubulure présentant une première extrémité solidaire d'une zone de transmission et une deuxième extrémité se terminant par un cylindre solidaire d'une zone de refoulement, la tubulure comprenant une ouverture d'aspiration et la zone de refoulement comprenant une ouverture de refoulement, un arbre d'entrainement s'étendant entre la zone de transmission et la tubulure avec un bout située au niveau du cylindre, un piston agencé dans la zone de refoulement et monté coulissant au bout de l'arbre en étant plaqué contre le cylindre par des moyens élastiques de manière à bloquer un déplacement de fluide entre la tubulure et la zone de refoulement lorsque la pompe est à vide, dans laquelle le cylindre (24) est délimité par deux parois circulaires de diamètres différents, le diamètre du piston (6) étant compris entre ces deux diamètres et caractérisée en ce que les moyens élastiques sont agencés pour
plaquer le piston contre le cylindre lorsque la pompe fonctionne en charge, et en ce que les moyens élastiques comprennent au moins un ressort radial monté à l'extrémité du piston, la direction de la force de rappel du ressort forme un angle non nul avec une droite passant par les deux points de contact entre le piston et le cylindre lorsque la pompe est à vide.

Le décalage angulaire du ressort radial permet de s'assurer que la direction de la force de rappel sera sensiblement parallèle avec la droite reliant les points de contact entre le piston et le cylindre lorsque la pompe est en charge.

Selon un mode de réalisation de l'invention, l'angle est compris entre 1 et 30°.

Selon un mode de réalisation de l'invention, les moyens élastiques comprennent une première portion de l'arbre d'entrainement dont la surface de la section est inférieure aux surfaces des sections des portions adjacentes de sorte à pouvoir se déformer élastiquement lors de la rotation de l'arbre d'entrainement.

La déformation élastique de la première portion de l'arbre permet de de maintenir plaqué le piston contre le cylindre de la pompe avec un effort de plaquage connu.

Selon un mode de réalisation de l'invention, la première portion forme une lame flexible.

Selon un mode de réalisation de l'invention, la surface de la section de la première portion est un rectangle.

Selon d'autres caractéristiques avantageuses :
- le piston effectue un mouvement orbital à l'intérieur du cylindre lorsque la pompe fonctionne ;
- le cylindre est muni d'une paroi permettant d'isoler l'ouverture d'aspiration et la zone de refoulement ;
- la jupe du piston est interrompue au droit de ladite paroi.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[Fig. 1] représente une vue en coupe longitudinal d'une pompe volumétrique excentré conforme à un premier mode de réalisation de l'invention,
[Fig. 2] représente une vue de l'arbre d'entrainement de la pompe selon le premier mode de réalisation de l'invention,
[Fig. 3] représente une vue une vue schématique d'un deuxième mode de réalisation de l'invention,

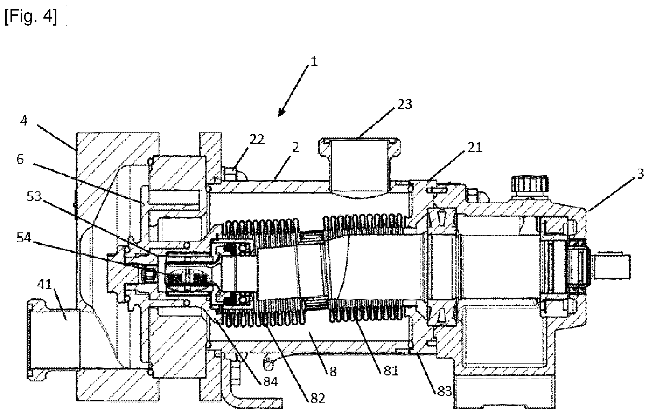

[Fig. 4] représente une vue en coupe longitudinal d'une pompe volumétrique excentré conforme à un deuxième mode de réalisation de l'invention,

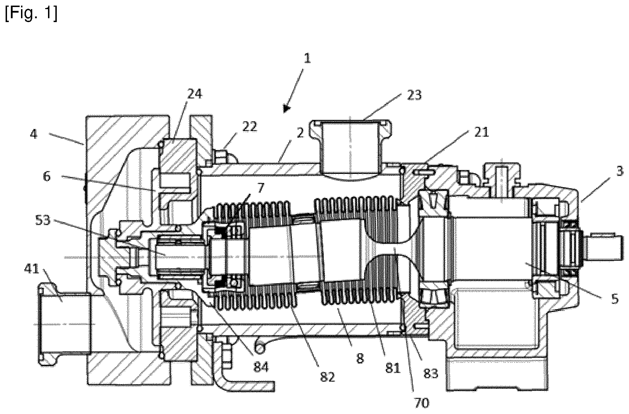

-La figure 1 représente une pompe 1 volumétrique piston excentré conforme à l'invention telle que vue en coupe longitudinale.

La pompe 1 comprend une tubulure 2 ayant une première extrémité 21 et une deuxième extrémité 22 ainsi qu'une ouverture d'aspiration 23.

La première extrémité 21 de la tubulure 2 est solidaire d'une zone de transmission 3 qui comprend des moyens de transmission de la pompe 1. La deuxième extrémité 22 comprend un cylindre 24 et est solidaire d'une zone de refoulement 4 qui comprend une ouverture de refoulement 41.

Un arbre de d'entrainement 5 s'étend de la zone de transmission 3 dans la tubulure 2. Une extrémité 53 de l'arbre 5 est située au niveau du cylindre 24.

Comme cela est visible sur la figure 1, dans cet exemple de réalisation, une manchette 8 est agencée dans la tubulure 2 autour de l'arbre 5. La manchette 8 comprend un soufflet métallique en deux parties 81, 82, par exemple en acier. La manchette 8 est fixée étanchement par des premiers moyens de fixation 83 à la première extrémité 21 de la tubulure 2 et par des deuxièmes moyens de fixation 84 à l'extrémité 53 de l'arbre 5. Une telle manchette est en soi connue de l'Homme du métier. Elle est par exemple décrite en détail dans le document WO97/36107.

Les deuxièmes moyens de fixation 84 de la manchette, sont également solidaires du piston et peuvent donc coulisser sur l'extrémité 53 de l'arbre 5 en même temps que le piston.

Un piston 6 est agencé dans la zone de refoulement 4 et monté coulissant à l'extrémité 53 de l'arbre 5. Des moyens élastiques 7, 70 sont présents sur le piston de sorte que ceux-ci le plaquent contre le cylindre 24 de manière à bloquer tout déplacement de fluide entre la tubulure 2 et la zone de refoulement 4. Le fonctionnement d'une telle pompe est connu de l'Homme du métier.

Les moyens élastiques comprennent par exemple une première portion 70 de l'arbre d'entrainement 5 dont la surface de la section est inférieure aux surfaces des sections des portions adjacentes. En d'autre terme, la première section est amincie par rapport aux sections. Cet amincissement autorise une déformation élastique de l'arbre 5 d'entrainement lors du fonctionnement de la pompe 1. L'orientation de la première section 70 est choisie pour que le piston 6 soit plaqué contre le cylindre 24 par l'effort de flexion exercé par la première section 70.

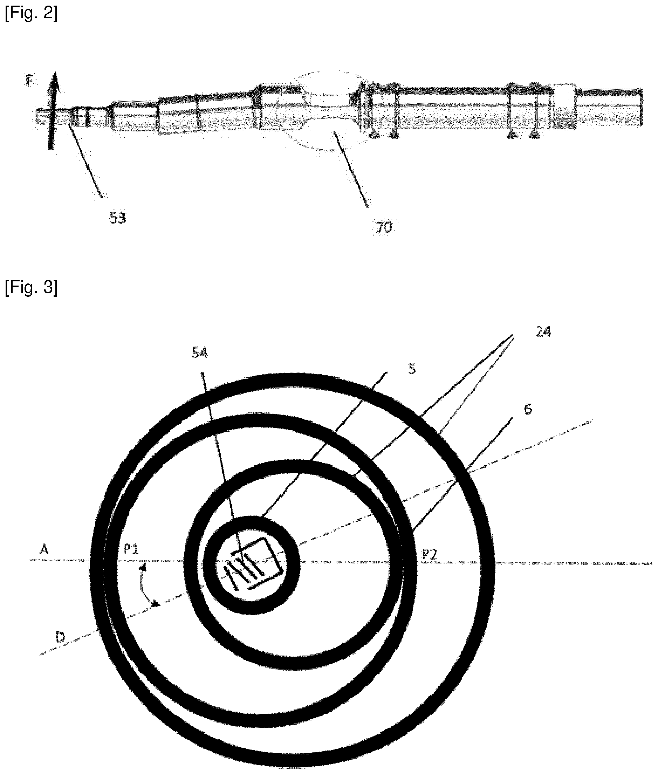

Selon le mode de réalisation représenté à la figure 2, la première section 70 est en forme de lame flexible par exemple de section rectangulaire. La déformation élastique s'exerce sur la partie de la lame la plus mince et exerce une force de rappel selon la direction F. La partie de plus grande épaisseur assure la reprise d'effort liée à la pression s'exerçant sur le piston.

Le cylindre 24 est équipé d'une cloison (non représentée) qui sépare la zone d'aspiration et la zone de de refoulement de la pompe 1. Le disque du piston présente à cet endroit une ouverture pour laisser passer la cloison. Cette discontinuité dans le cycle de pompage provoque temporairement des efforts qui contribuent à recentrer le piston.

L'utilisation d'une première portion 70 amincie d'arbre d'entrainement 5 telle qu'une lame flexible permet d'avoir un piston plus réactif qui va se recentrer plus rapidement. Par ailleurs, la première portion 70 amincie permet de supprimer des ressorts radiaux montés à l'extrémité 53 de l'arbre d'entrainement. Ces ressorts assurent de manière connue le plaquage du piston 6 sur le cylindre. Les efforts des ressorts sont repris par un coussinet lequel frotte une bague de glissement solidaire du piston. Lors du recentrage du piston le frottement de la bague sur le coussinet vient ralentir le mouvement de recentrage du piston ce qui dégrade le rendement de la pompe 1.

Selon une autre variante de réalisation, les moyens élastiques comprennent au moins un ressort radial 54 monté à l'extrémité de l'arbre d'entrainement 5. Le(s) ressort(s) radial (aux) est (sont) agencé(s) pour assurer le plaquage du piston 6 sur le cylindre 24 à la fois lorsque la pompe fonctionne à vide et lorsque la pompe fonctionne en charge. En d'autre terme, l'orientation du (des) ressort(s) radial (aux) sur l'extrémité de l'arbre d'entrainement 5 est choisie pour compenser la force de pression qui s'exerce sur le piston 6 et qui tend à faire fléchir l'arbre 5 d'entrainement.

La figure 3 représente schématiquement l'orientation du (des) ressort(s) radial (aux) sur l'extrémité de l'arbre d'entrainement (5) lors que la pompe est à vide. Selon l'invention, le (les) ressort(s) radial (aux) sont montés avec un décalage angulaire par rapport à une droite A passant par les points de contact P1 et P2 entre le piston 6 et le cylindre 24. Ce décalage angulaire permet à la direction D de la force de rappel du (des) ressort(s) radial (aux) de faire un angle non nul avec la droite A. L'angle est déterminé de sorte qu'à vide la composante de la force de rappel parallèle à la droite A soit suffisante pour maintenir le plaque du piston 6 contre le cylindre tel que représenté à la figure 3.

Lorsque la pompe 1 fonctionne en charge la force de pression s'exerçant sur le piston 6 tend à faire fléchir l'axe et donc à déplacer les points de contact P1 et P2 entre le piston 6 et le cylindre. La droite A change donc d'orientation. Selon l'invention, le décalage angulaire est choisi pour que lorsque que la pompe 1 est en charge la direction de la force de rappel du (des) ressort(s) radial (aux) coïncide avec la nouvelle droite qui relie les points de contact entre le piston 6 et le cylindre 24. Ainsi, en fonctionnement en charge, la composante de la force de rappel est maximale dans l'alignement des points de contact avec le piston 6 et le cylindre 24.

Selon une mode de réalisation, l'angle entre la droite A reliant les points de contact P1 et P2 lorsque la pompe est à vide et la direction D de la force de rappel du (des) ressort(s) radial (aux) est compris entre 1 et 30°.

Selon l'invention, les deux modes de réalisation peuvent être combinés. Ainsi, l'arbre d'entrainement 5 comprenant la première portion 70 amincie peut comprendre un ou plusieurs radiaux montés à l'extrémité de l'arbre d'entrainement 5 avec un décalage angulaire par rapport à la droite A.

On comprendra que diverses modifications et/ou améliorations évidentes pour l'homme du métier peuvent être apportées aux différents modes de réalisation de l'invention décrits dans la présente description à condition de rester dans la portée des revendications.

## Revendications

1. Pompe (1) volumétrique à piston excentré comprenant :
- une tubulure (2) présentant une première extrémité (21) solidaire d'une zone de transmission (3) et une deuxième extrémité (22) se terminant par un cylindre (24) solidaire d'une zone de refoulement (4), la tubulure (2) comprenant une ouverture d'aspiration (23) et la zone de refoulement comprenant une ouverture de refoulement (41),
- un arbre d'entrainement (5) s'étendant entre la zone de transmission 3 et la tubulure avec une extrémité (53) située au niveau du cylindre (24),
- un piston (6) agencé dans la zone de refoulement (4) et monté coulissant à l'extrémité (53) de l'arbre (5) en étant plaqué contre le cylindre (24) par des moyens élastiques (7) de manière à bloquer un déplacement de fluide entre la tubulure (2) et la zone de refoulement (4) lorsque la pompe est à vide, dans laquelle le cylindre (24) est délimité par deux parois circulaires de diamètres différents, le diamètre du piston (6) étant compris entre ces deux diamètres et **caractérisée en ce que** les moyens élastiques sont agencés pour plaquer le piston contre le cylindre lorsque la pompe fonctionne en charge, et **en ce que** les moyens élastiques comprennent au moins un ressort (54) monté à l'extrémité du piston, la direction (D) de la force de rappel du ressort (54) formant un angle non nul avec une droite (A) passant par les deux points de contact entre le piston (6) et le cylindre (24) lorsque la pompe (1) est à vide.

2. Pompe (1) volumétrique à piston excentré selon la revendication 1, dans laquelle l'angle est compris entre 1 et 30°.

3. Pompe (1) volumétrique à piston excentré selon la revendication 1 ou 2, dans laquelle les moyens élastiques comprennent une première portion (70) de l'arbre d'entrainement (5) dont la surface de la section est inférieure aux surfaces des sections des portions adjacentes de sorte à pouvoir se déformer élastiquement lors de la rotation de l'arbre d'entrainement (5).

4. Pompe (1) volumétrique à piston excentré selon la revendication précédente dans laquelle la première portion (70) forme une lame flexible.

5. Pompe (1) volumétrique à piston excentré selon l'une des revendications 3 ou 4 dans laquelle la surface de la section de la première portion est un rectangle.

6. Pompe (1) volumétrique à piston excentré selon l'une des revendications précédentes dans laquelle le piston (6) effectue un mouvement orbital à l'intérieur du cylindre (24) lorsque la pompe (1) fonctionne.

7. Pompe (1) volumétrique à piston excentré selon l'une des revendications précédentes dans laquelle le cylindre (24) est muni d'une paroi permettant d'isoler l'ouverture d'aspiration (23) et la zone de refoulement (4).

8. Pompe (1) volumétrique à piston excentré selon la revendication précédente dans laquelle la jupe du piston (6) est interrompue au droit de ladite paroi.

## Patentansprüche

1. Exzenterkolben-Verdrängerpumpe (1), umfassend:
- ein Verteilungsrohr (2) mit einem ersten Ende (21), das fest mit einem Übertragungsbereich (3) verbunden ist, und einem zweiten Ende (22), das in einem Zylinder (24) endet, der fest mit einem Fördermengenbereich (4) verbunden ist, wobei das Verteilungsrohr (2) eine Ansaugöffnung (23) und der Fördermengenbereich eine Fördermengenöffnung (41) aufweist,
- eine Antriebswelle (5), die sich zwischen dem Übertragungsbereich (3) und dem Verteilungsrohr erstreckt und deren eines Ende (53) in Bezug auf den Zylinder (24) angeordnet ist,
- einen Kolben (6), der im Fördermengenbereich (4) angeordnet und gleitend am Ende (53) der Welle (5) angebracht ist, wobei er durch elastische Mittel (7) gegen den Zylinder (24) gedrückt wird, um eine Fluidverschiebung zwischen dem Verteilungsrohr (2) und dem Fördermengenbereich (4) zu blockieren, wenn die Pumpe leer ist,
wobei der Zylinder (24) durch zwei kreisförmige Wände mit unterschiedlichen Durchmessern begrenzt ist, wobei der Durchmesser des Kolbens (6) zwischen diesen zwei Durchmessern liegt, und **dadurch gekennzeichnet, dass** die elastischen Mittel so angeordnet sind, dass sie den
Kolben gegen den Zylinder drücken, wenn die Pumpe unter Last arbeitet, und dass die elastischen Mittel mindestens eine Feder (54) umfassen, die am Ende des Kolbens angebracht ist, wobei die Richtung (D) der Rückstellkraft der Feder (54) einen von Null verschiedenen Winkel mit einer Geraden (A) bildet, die durch die zwei Berührungspunkte zwischen dem Kolben (6) und dem Zylinder (24) verläuft, wenn die Pumpe (1) leer ist.

2. Exzenterkolben-Verdrängerpumpe (1) nach Anspruch 1, wobei der Winkel zwischen 1 und 30° liegt.

3. Exzenterkolben-Verdrängerpumpe (1) nach Anspruch 1 oder 2, wobei die elastischen Mittel einen ersten Abschnitt (70) der Antriebswelle (5) umfassen, dessen Abschnittsoberfläche kleiner als die Abschnittsoberflächen benachbarter Teile ist, so dass er bei der Drehung der Antriebswelle (5) elastisch verformbar ist.

4. Exzenterkolben-Verdrängerpumpe (1) nach dem vorhergehenden Anspruch, wobei der erste Abschnitt (70) ein flexibles Blatt bildet.

5. Exzenterkolben-Verdrängerpumpe (1) nach einem der Ansprüche 3 oder 4, wobei die Abschnittsoberfläche des ersten Teils ein Rechteck ist.

6. Exzenterkolben-Verdrängerpumpe (1) nach einem der vorhergehenden Ansprüche, wobei der Kolben (6) im Betrieb der Pumpe (1) eine Orbitalbewegung im Inneren des Zylinders (24) ausführt.

7. Exzenterkolben-Verdrängerpumpe (1) nach einem der vorhergehenden Ansprüche, wobei der Zylinder (24) mit einer Wand versehen ist, die es ermöglicht, die Ansaugöffnung (23) und den Fördermengenbereich (4) zu isolieren.

8. Exzenterkolben-Verdrängerpumpe (1) nach dem vorhergehenden Anspruch, wobei der Mantel des Kolbens (6) direkt unter der Wand unterbrochen ist.

## Claims

1. Positive displacement pump (1) having an eccentric piston, comprising:
- a tube (2) having a first end (21) secured to a transmission zone (3) and a second end (22) that is terminated by a cylinder (24) secured to a delivery zone (4), the tube (2) comprising an intake opening (23) and the delivery zone comprising a delivery opening (41),
- a drive shaft (5) extending between the transmission zone (3) and the tube with one end (53) situated by the cylinder (24),
- a piston (6) arranged in the delivery zone (4) and mounted in a sliding manner at the end (53) of the shaft (5), being pressed against the cylinder (24) by elastic means (7) so as to prevent fluid displacement between the tube (2) and the delivery zone (4) when the pump is dry, wherein the cylinder (24) is delimited by two circular walls with different diameters, the diameter of the piston (6) being between these two diameters, **characterized in that** the elastic means are designed to press the piston against the cylinder when the pump is running under load, and **in that** the elastic means comprise at least one spring (54) mounted at the end of the piston, the direction (D) of the return force of the spring (54) forming a non-zero angle with a straight line (A) passing through the two points of contact between the piston (6) and the cylinder (24) when the pump (1) is dry.

2. Positive displacement pump (1) having an eccentric piston according to Claim 1, wherein the angle is between 1 and 30°.

3. Positive displacement pump (1) having an eccentric piston according to Claim 1 or 2, wherein the elastic means comprise a first portion (70) of the drive shaft (5), the cross-sectional area of which is less than the cross-sectional areas of the adjacent portions so as to be able to deform elastically during the rotation of the drive shaft (5).

4. Positive displacement pump (1) having an eccentric piston according to the preceding claim, wherein the first portion (70) forms a flexible strip.

5. Positive displacement pump (1) having an eccentric piston according to either of Claims 3 and 4, wherein the cross-sectional area of the first portion is rectangular.

6. Positive displacement pump (1) having an eccentric piston according to one of the preceding claims, wherein the piston (6) carries out an orbital movement within the cylinder (24) when the pump (1) is running.

7. Positive displacement pump (1) having an eccentric piston according to one of the preceding claims, wherein the cylinder (24) is provided with a wall for isolating the intake opening (23) and the delivery zone (4).

8. Positive displacement pump (1) having an eccentric piston according to the preceding claim, wherein the skirt of the piston (6) is interrupted in line with said wall.
